# EUROPEAN PATENT SPECIFICATION

(11) **EP 2 167 408 B1**
(45) Date of publication and mention of the grant of the patent: **14.11.2012**
(21) Application number: 08772738.4
(22) Date of filing: 06.06.2008
(51) Int. Cl.: B65G 47/24, A23N 15/00

(54) **SYSTEM FOR THE AUTOMATIC DETERMINATION OF THE POSITION AND ORIENTATION OF A FRUIT**
SYSTEM ZUR AUTOMATISCHEN BESTIMMUNG DER POSITION UND AUSRICHTUNG EINER FRUCHT
SYSTÈME DE DÉTERMINATION AUTOMATIQUE DE LA POSITION ET DE L'ORIENTATION D'UN FRUIT

(30) Priority: 06.06.2007 EP 07011110
(43) Date of publication of application: 31.03.2010
(73) Proprietor: Visiomatics NV, 3590 Diepenbeek (BE)
(72) Inventor: BAERTS, Constant, 2431 Laakdal (BE); CLAESEN, Eric, 3721 Vliermaalroot (BE); DONNE, Kevin, 3730 Hoeselt (BE)
(74) Representative: D'Halleweyn, Nele Veerle Trees Gertrudis
(86) International application number: PCT/BE2008/000044
(87) International publication number: WO 2008/148177

(56) References cited:
- EP-A- 1 183 197
- JP-A- 61 069 607
- US-A- 4 033 450
- US-A- 4 687 107

## Description

### FIELD OF THE INVENTION

The present invention relates to a system for the automatic determination of the position and orientation of a fruit, said fruit comprising at least one rotation axis, according to the preamble of claims 1 and 3.

### BACKGROUND OF THE INVENTION

Reference may be made to U.S. Pat. No. 7,293,638 titled : "Orientation unit for a fruit sorting and grading machine" wherein an orientation unit for fruit sorting an grading machines is described. The background section of the description of U.S. Pat. No. 7,293,638 gives an overview of known prior art from which it becomes clear that there is a definite need for providing an orientation unit for fruit sorting and grading machines.

Prior art reference is made to U.S. Pat. No. 4,221,297, titled "Electronic fruit grading machines" wherein an electronic fruit grading machine is presented. The machine positions the fruit in transverse rows on rollers which rotate. The fruit is displaced at a certain speed under an electronic apparatus capable of detecting surface marks or defects in the fruit. The grading machine further comprises an electromechanical system for ejecting unacceptable fruit detected by the electronic apparatus. The drawback of this machine of U.S. Pat. No. 4,221,297 is that the grading is only done in two categories namely, accepted or rejected. Its inspection system is not precise enough to grade them in more than two categories.

Prior art reference is also made to U.S. Pat. No. 4,687,107, wherein a machine titled: "Apparatus for sizing and sorting of articles" has been described. This apparatus sorts articles according to any combination of plural criteria, including volume or diameter, length, shape, weight, colour, density and surface quality. A light sensitive dynamic random access memory and novel processing circuitry are utilized for providing indications of the article's volume, diameter and length. The drawback in this machine of U.S. Pat. No. 4,687,107, is that complete surface inspection like looking for possible bruises etc. is not done. The fruits are carried by rollers, where the colour sensor and the surface inspector see only a part of the surface of the fruit. The operator has no control on which part of the surface of the fruit is seen by the colour sensor and surface inspector. If the fruit is not oriented properly on the rollers, the machine may end up seeing the stem part of the fruit and on the basis of such vision a fruit cannot be evaluated.

Reference is also made to U.S. Pat. No. 6,079,542, titled: "Object sorter and sizer" wherein an apparatus and methods for sorting objects such as fruits, by categories, such as size, shape, weight and colour have been described. The object sorting system includes a product presentation device which moves objects through the system to be sorted and deposit the objects at an appropriate job station. The product presentation device allows for accurate determination of object weights and can also be married to or divorced from wheels which are used to turn the object in front of a viewer for sorting the object based on visual characteristics. The system has independently driven chain drives for the wheels and the product presentation devices. The major drawback of said U.S. Pat. No. 6,079,542 is that this machine rotates but does not orient the fruit which results in taking photographs of unwanted parts of the fruit, thereby increasing the load and cost of image processing.

From the prior art description given above it is clear that there is a definite need for providing an orientation unit for fruit sorting and grading machines.

U.S. Pat. No. 7,293,638, titled "Orientation unit for a fruit sorting and grading machine" describes an orientation unit for fruit sorting an grading machines, for rolling fruit around its major axis at a fixed rpm depending upon the imaging and processing speed so as to make it possible for a camera to scan the entire periphery of the fruit. This orientation unit comprises a proximally placed set of two pairs of spring loaded freely rotatable rollers on horizontal shafts mounted on vertical supports; each of the said pair of rollers consisting of a conical and cylindrical rollers, wherein the inside edge of the conical rollers of each of the said pair of rollers having an elliptical profile and the inside edge of the cylindrical rollers of each of the said pair of rollers having a flat laminar surface; the said set of two pairs of rollers being provided with direct underneath contact with a variable speed horizontally moving endless belt. The orientation unit is based on the gyration principle. If an apple is rotated on the rollers, at around 600 rpm, the apple gets oriented with its major axis along the axis of rotation. Light springs are placed between fixed clamp and the end of the rollers, so that during rotation rollers can move along the axis of rotation to adjust themselves to the profile of the apple. Once an apple is oriented on the rollers with its major axis perpendicular to the plane of rotation it continues to stay in that orientation even at lower speed of rotation. The apple can be rotated at a fixed rpm, while it is travelling through the view angle of a camera in for online quality assessment by image processing.

U.S. Pat. No. 4,033,450, titled " Conveyor with removable receptacles" discloses a system for the automatic determination of the position and orientation of a fruit according to the preamble of claims 1 and 3, it describes a conveyor carying receptacles, each receptacle able to to seat an individual fruit and protect it from falling of, comprising two parallel rollers for imposing a rotation to the fruit such that the major axis of the fruit, i.e. the axis through the stem and blossom ends of the fruit, is parallel to the direction of travel of the conveyor, the conveyor moving the receptacles through an inspection station, where the individual fruit may be successively X-rayed. Said system does not contain a vision system for automatic determination of the position and orientation of a fruit, nor are the rollers divergent (i.e. the angle between the rollers is zero).

WO 01/16003, titled "Device for orienting a number of similar objects, such a fruits" discloses a device for orienting a number of objects, comprising a holder conveyor comprising sets of two diabolo-shaped rollers, and lifting means, in particular a supporting plate, synchronously co-displaceable with the holders and rotable relative thereto for lifting the objects out of the holders and rotating them into an oriented standing rotational position relative to the standing rotation axis of the holder, and a detector for detecting the standing rotational position of each object, and a control device for the lifting means, which is connected to the detector and which activates the lifting means for a relevant object as long as is required to ratate the object into the oriented standing rotational position. The system does not comprise supporting plates for preventing the fruit, placed on the rollers, from falling of the rollers as the diabolo-shaped rollers are themselves receptacles containing the fruits and do not require the presence of a supporting plate for preventing the fruit from falling of the rollers. Also, when the fruits are lifted from the rollers by the supporting plates, they loose contact with the rollers, and therefore, when placed between the rollers, they do not exert a gravitational force on the supporting plates. Furthermore, the vision system does not identify the position and/or orientation of the fruit placed on the rollers, but placed on the supporting plate.

### SUMMARY OF THE INVENTION

The present invention provides a system for the automatic determination of the position and orientation of a fruit, which comprises at least one rotation axis according to claim 1, and an alternative system according to claim 3. It was found that a fruit, which is leaning on the supporting plate (2), adopts a predictable and stable rotation movement on the rollers a short time after a rotation is imposed on the fruit by rotating one or both of the rollers. For instance, an apple will either rotate around its crown-stalk axis or around an axis perpendicular to the crown-stalk axis when imposing a rotation on the apple using a system according to the present invention. The knowledge of the predictable rotation movements of said fruit allows for the automatic determination of the orientation and position of the fruit within a short time interval using a vision system (15) suitable for the acquisition and analysis of images of the rotating fruit. This information on orientation and position of the fruit can subsequently be used for manipulating the fruit, for instance by a robot suitable for packaging fruit in a desired position and orientation.

### DETAILLED DESCRIPTION

### Legends to the figures

**Figure 1****:** Apparatus for the automatic sorting and packaging of apples comprising an orientation unit according to the present invention (side view).
**Figure 2****:** Apparatus for the automatic sorting and packaging of apples comprising an orientation unit according to the present invention (top view).
**Figure 3****:** View of the rollers (1) and the supporting plate (2) of a system for automatic determination of the position and orientation of a fruit according to the present invention.
**Figure 4****:** System for automatic determination of the position and orientation of a fruit according to the present invention wherein the rollers (1) are mounted under an angle and wherein the supporting plate (2) is mounted such that it prevents the fruit from falling of the rollers (1) at the side of the diverging ends of the rollers.
**Figure 5****:** System for automatic determination of the position and orientation of a fruit according to the present invention wherein the rollers are conical and wherein the supporting plate (2) is mounted such that it prevents the fruit (14) from falling of the rollers at the side of the rollers with the smallest diameter.
**Figure 6****:** Detailed view of the supporting plate (2).
**Figure 7****:** Detailed view of the base plate and the means for adjusting (13, 32) the inclination of the base plate (5) with respect to the base plane.
**Figure 8****:** Detailed view of a roller holder (25) comprising a roller (1), a clutch (27) and a motor (26).
**Figure 9****:** Top view of the base plate (5) comprising means for attaching the hinges (31), means for attaching the ruler (29), means for attaching the roller holders (30) and means for attaching the supporting plate (28).
**Figure 10****:** Representation of the laser illumination of the apple on the rollers. (A) schematic representation of the means for projecting the line of laser light on the apple; (B) picture of the line of laser light projected on the stalk zone of an apple.

### Description

The present invention provides a system for the automatic determination of the position and orientation of a fruit, said fruit comprising at least one rotation axis. This system comprises two rollers (1) mounted with respect to each other such that a fruit placed on the rollers is supported by the walls of the rollers. The system further comprises a supporting plate (2), which prevents a fruit (14) placed on the rollers from falling off. Preferably, the rollers are positioned or designed such that a fruit (14) placed on the rollers exerts a gravitational force on the supporting plate (2). It was found that a fruit, which is leaning on the supporting plate (2), adopts a predictable and stable rotation movement on the rollers a short time after a rotation is imposed on the fruit by rotating one or both of the rollers. For instance, an apple will either rotate around its crown stalk axis or around an axis perpendicular to the crown stalk axis when imposing a rotation on the apple using a system according to the present invention. The knowledge of the predictable rotation movements of said fruit allows for the automatic determination of the orientation and position of the fruit within a short time interval using a vision system (15) suitable for the acquisition and analysis of images of the rotating fruit. This information on orientation and position of the fruit can subsequently be used for manipulating the fruit, for instance by a robot suitable for packaging fruit in a desired position and orientation. So in a first object the present invention provides a system for the automatic determination of the position and orientation of a fruit (14) said system comprising:
● two rollers (1) for imposing a rotation to a fruit (14) by rotating at least one of said rollers (1);
● a supporting plate (2) for preventing the fruit (14) from falling of the rollers (1) and;
● a vision system (15) for identifying the position and/or orientation of the fruit (14) on the rollers (1).
Furthermore, the design of said rollers and/or their positioning with respect to each other and the supporting plate (2) are such that a fruit (14) placed on the rollers (1) is supported by the walls of the rollers (1) and leans on the supporting plate (2). One or both of the rollers typically comprises means for rotating the rollers around the roller axis. Preferably, the system further comprises a means for detecting (4) the presence of a fruit on the rollers. Upon detection of a fruit the means for rotating the rollers can be activated in order to impose a rotation to the fruit.

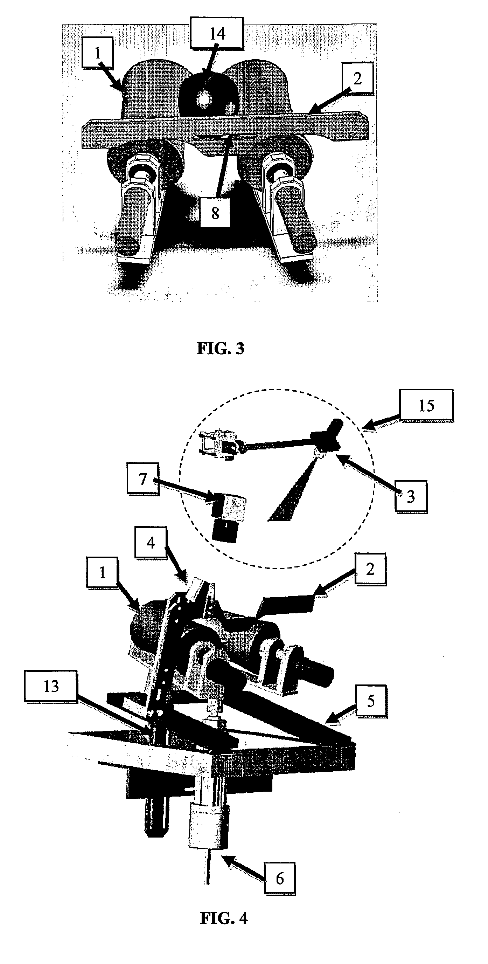

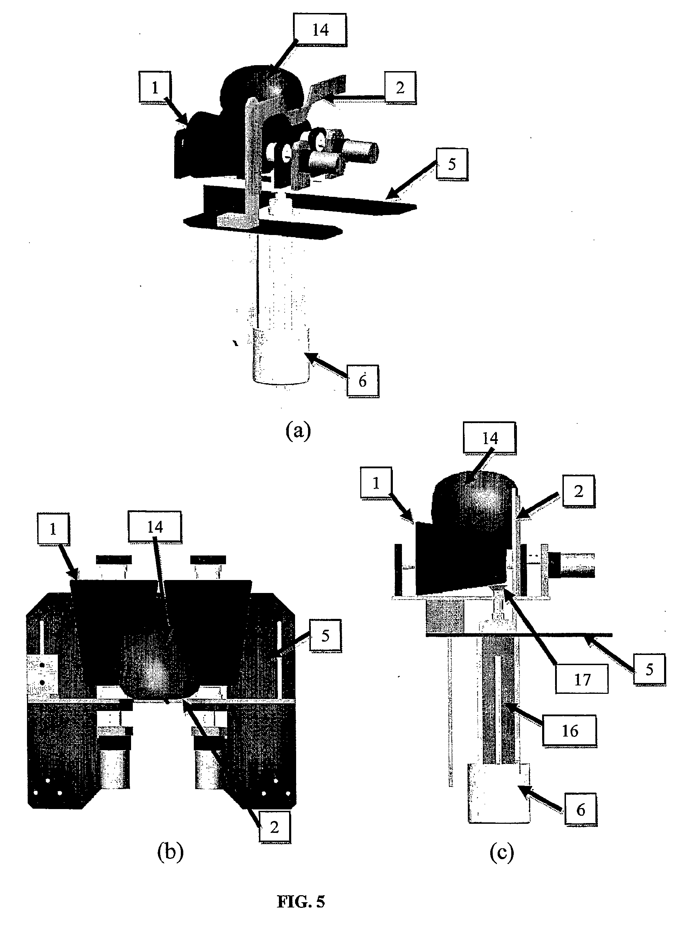

In the present invention the rollers are mounted such that the axes of the rollers (1) form an angle between 25 and 40°, resulting in the ends of the rollers pointing towards each other at one side, while diverging at the other side (Figures 5 and 4). In order to allow adjusting the system to the type, nature or variety of the fruit it is preferred that the system of the present invention comprises means to adjust the angle between the axes of the rollers. Furthermore, the supporting plate (2) is positioned such that it prevents the fruit from falling of the rollers (1) at the side of the diverging ends. In a more preferred embodiment, the rollers are further positioned such that the plane through the axes of the rollers forms an angle between 15 and 40°, more preferably between 25 and 40°, for instance between 30 and 40° with the base plane. The supporting plate (2) thus prevents the fruit (14) from falling of the inclined rollers in the direction of the diverging ends. In order to allow adjusting the system to the type, nature or variety of the fruit it is preferred that the system of the present invention comprises means for adjusting the angle (13, 32) between the plane through the axes of the rollers and the base plane.

In an alternative embodiment of the present invention, the system comprises conical rollers (1) and the supporting plate (2) is positioned such that it prevents the fruit placed on the rollers from falling of in the direction of the side of the rollers with the smallest diameter (Figure 5). In this embodiment the conical rollers can be positioned such that their axes are parallel or form an angle. Further, the conical rollers can be positioned such that the plane through the axes of the rollers is either parallel to or inclined with respect to the base plane.

It is preferred that the roller surface comprises a brush structure for minimalising the damage to the fruit. In a more preferred embodiment the rollers (1) are concave rollers having a brush surface. The damage to the fruit can further be minimised by covering the side of the supporting plate (2) in contact with the fruit with a soft material. In addition, it is preferred that the supporting plate comprises a recess (8) at the position of the supporting plate where it is expected that the fruit stalk would contact the supporting plate. The presence of such a recess is particularly relevant in case the system of the present invention is used for fruit that is marketed with the stalk, such as apples. In case the presence of such recess would result in an increased risk of the fruit falling over the supporting plate (2) an additional barrier (9) for retaining the fruit is provided above the recess (8).

The vision system (15) of the system of the present invention preferably comprises a computing unit operationally connected to one or more cameras (7) suitably positioned for capturing images of the rotating fruit (14). In operation the images captured by the camera can be automatically analysed by the computing system using appropriate image analysis software, such as customised Halcon routines, in order to determine the position and orientation of the fruit on the rollers (1). This analysis takes into account the knowledge on the predictable and stable rotation movement of the fruit on the rollers allowing the computing unit to determine the position and orientation of the fruit within a relatively short time interval. The vision system may further comprise means for illuminating (3) the fruit (14). In a preferred embodiment the means for illuminating the fruit are selected and positioned such that the light projected on the fruit can be used in the analysis of the images of the fruit. In a more preferred embodiment, the means for illuminating the fruit are LED lights. In an even more preferred embodiment, the means for illuminating the fruit project structured light on the fruit, such as laser light. The vision system can also be used for analysing and inspecting quality parameters and surface characteristics of the fruit. The vision system can for instance be used for mapping the colour variation on the fruit or for detecting defects on the fruit surface. The information on the colour variation on the fruit surface can subsequently be used by a packaging robot when positioning the fruit. Fruits comprising certain visually detectable surface defects can be automatically discarded.

The system according to the present invention may further comprise means for automatically modifying the position and/or orientation (6) of the fruit on the rollers using information provided by the vision system. Such means for automatically modifying the position and/or orientation of the fruit can for instance be used to rotate an apple over an angle of 90° when the vision system detects that an apple rotates with the apple crown axis parallel to the supporting plate in order to reposition the apple such that it rotates around its crown stalk axis and with the crown stalk axis perpendicular to the supporting plate. Preferably the means for automatically modifying the position and/or orientation of the fruit comprises a pneumatically driven cylinder (16) for lifting and rotating the fruit and a suction cup (7) mounted on said cylinder for grabbing and holding the fruit during its repositioning. Preferably, this cylinder (16) is mounted between the rollers, underneath the zone where the fruit is situated after it is put on the rollers (1), such that the fruit can be grabbed when the cylinder performs an upward movement.

The system of the present invention is particularly suited for the automatic detection of the position and/or orientation of fruits comprising at least one rotation axis and more particular of hard fruit such as apples pears, apricots, peaches, plums, melons and citrus fruits. In a most preferred embodiment the system according to the present invention is used to determine the position and orientation of apples.

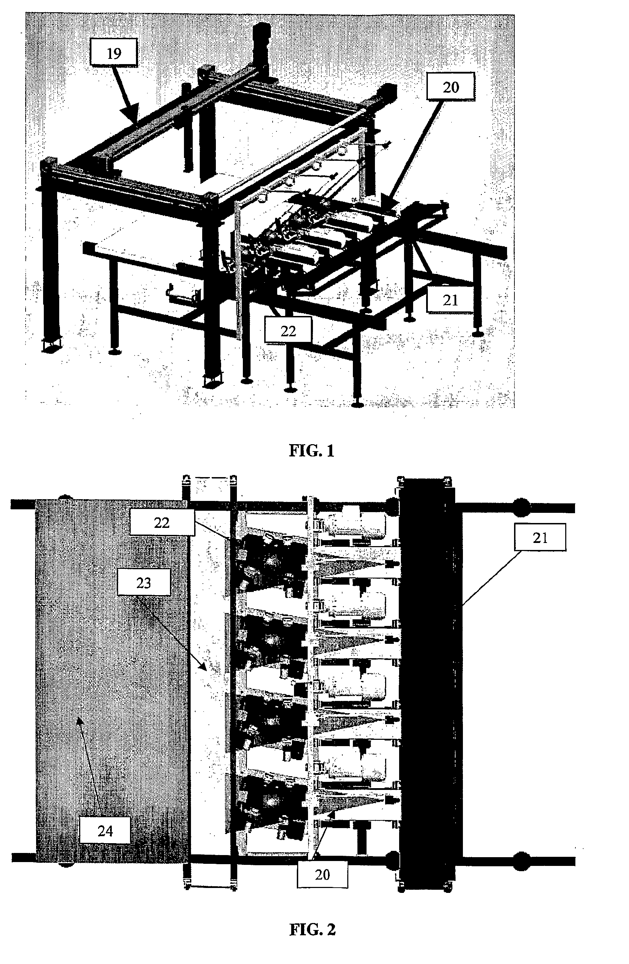

The system of the present invention can be integrated in an automatic packaging apparatus for fruit (Figures 1 and 2), wherein said packaging apparatus uses the information on the position and orientation of the fruit on the rollers to accurately place the fruit in a predefined position in the packaging material. In a preferred embodiment the system according to the present invention is installed between a fruit calibration unit, which sorts the fruit in size classes, and a packaging unit for transferring the fruit to the packaging material. In this setting the packaging apparatus further comprises means to transport the fruit from the calibration unit to the system of the present invention. Such packaging apparatus can comprise one or several systems for the automatic determination of the position and orientation of a fruit according to the present invention.

In a second object the present invention provides a method for the automatic determination of the position and orientation of a fruit (14) said method comprising the steps of:
● the placement of a fruit, for instance an apple, on two rollers (1) allowing to impose a rotation to a fruit (14) by rotating at least one of said rollers (1), said rollers and/or their positioning with respect to each other and a supporting plate (2) being such that a fruit (14) placed on the rollers (1) is supported by the walls of the rollers (1) and leans on the supporting plate (2);
● imposing a rotation on said fruit by rotating at least one of said rollers;
● identifying the position and/or orientation of the fruit (14) on the rollers (1) using a vision system (15), preferably using information on the predictable rotation movements said fruit adopts on the rollers.
The invention is further illustrated by way of the non-limiting examples given below.

### ILLUSTRATIVE EMBODIMENT

### Example 1: An apple orienting unit according to the present invention

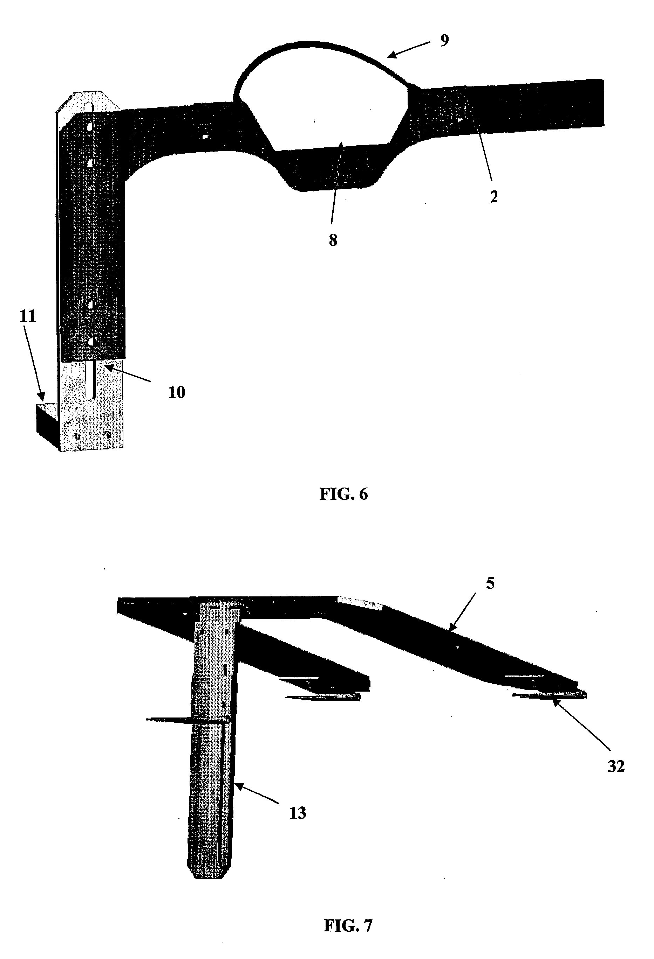

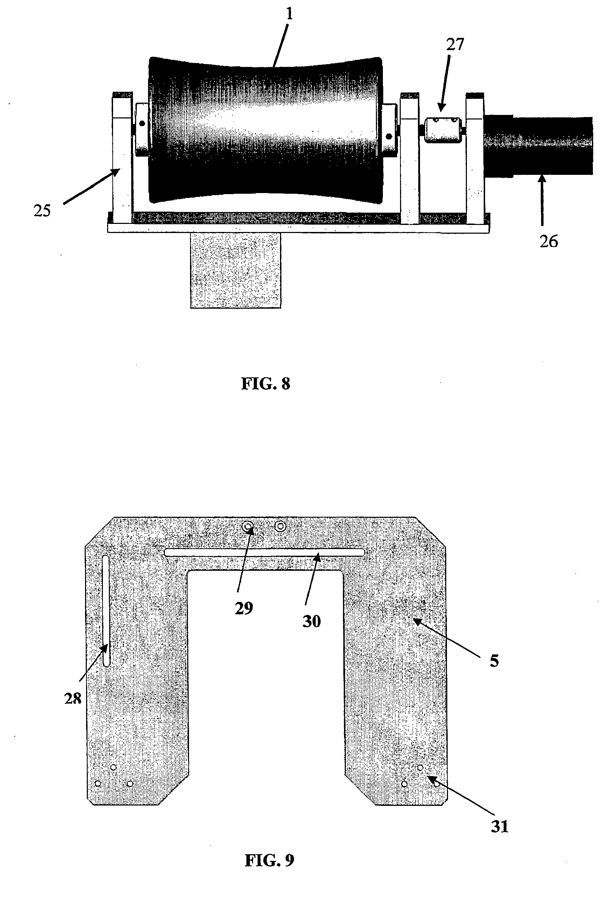

A unit for the determination of the position and orientation of apples according to the present invention comprised two rollers. Each of the rollers comprised bearings for fitting the rollers on an axle and was mounted in a separate roller holder (25) (Figure 8). Said holder further carried a DC motor (26) and a clutch (27) connecting the axle of the motor and the roller, respectively, such that the motor could drive the roller to rotate around its axis. The roller holders (25) comprising the rollers were mounted on a base plate (5) (Figure 9) wherein the axes of the rollers (1) formed an angle resulting in the ends of the rollers pointing towards each other at one side, while the ends at the other side diverged. The fixtures (30) on the base plate (5) for mounting the roller holders thereon comprised guide ways in order to allow an easy adjustment of the distance and the angle between the rollers in function of the size of the apples. At the side of the diverging ends of the rollers a supporting plate (2) was mounted on the base plate (5) for preventing the apples from falling of the rollers in the direction of the diverging ends. The height of the supporting plate could easily be adjusted depending on the size of the apples. Furthermore, the base plate (5) comprised a guide way (28) for mounting the supporting plate thereon, which also allowed easy repositioning of the support plate in function of the apple size.
The base plate was mounted on a frame using hinges (32) and an adjustable ruler (13) (Figures 4 and 7), which allowed to incline the base plate carrying the rollers and the supporting plate at a selected angle with respect to the base plane. Preferably, this angle was between 25 and 40°. Upon placement of an apple on the inclined rollers the apple moved towards the supporting plate (2) and leaned thereon, so that upon activation of the motors (26) the apple was rotating with part of its surface against the supporting plate. In order to minimise the damage to the apple due to the rotation against the supporting plate (2), the side of this plate in contact with the apples was dressed with a soft material. The plate (2) further comprised a recess (8) to avoid that the apple stalk would have been damaged because of the frictions associated with the rotation against the supporting plate (Figure 6). However, the presence of the recess (8) increased the chance of the apple falling over the supporting plate. Therefore, an arch (9) for retaining the apple was provided above the recess (8).
In order to automatically detect the presence of an apple on the rollers a light sensor (4) was installed on the supporting plate. Upon the detection of the presence of an apple the motors (26) of the rollers (1) were activated in order to impose a rotation movement on the apple. The rotation speed of the rollers typically varied around 45 rpm. At this speed the apple rapidly adopted either of the following stable rotation movements:
● rotation around its crown-stalk axis with the crown-stalk axis perpendicular to the supporting plate and the stalk pointing towards the supporting plate
● rotation around its crown-stalk axis with the crown-stalk axis perpendicular to the supporting plate and stalk pointing at the opposite side of the supporting plate
● rotation around an axis perpendicular to the crown-stalk axis with the crown-stalk axis being parallel to the supporting plate

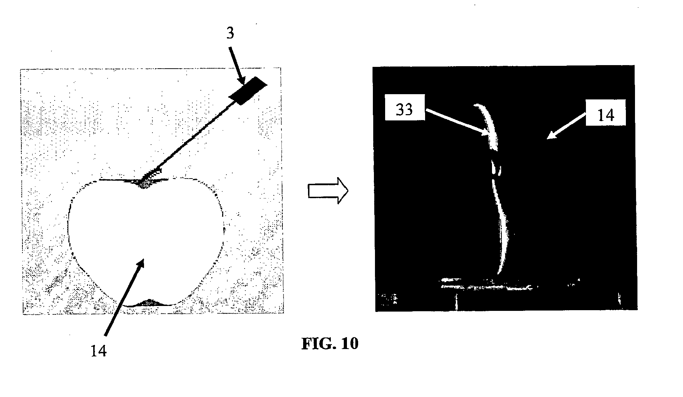

Once the apple had adopted a stable rotation movement the vision system (15) determined whether the apple was rotating with its crown-stalk axis parallel or perpendicular to the supporting plate. In case that the apple was rotating around its crown-stalk axis, with the crown-stalk axis perpendicular to the supporting plate, the vision system determined the position of the apple stalk and analysed the surface characteristics of the apple. In case the vision system (15) detected that the apple was rotating with its crown stem axis parallel to the supporting plate, the vision system instructed the rollers to stop at the moment the crown-stalk axis was perpendicular to the axis of a pneumatic cylinder installed (16) between the rollers underneath the zone where the apple is positioned on the rollers. The end of this pneumatic cylinder (16) could be moved upwards towards the apple and comprised a suction cup (17) for grabbing the apple connected to a vacuum line. Once the rollers were stopped the cylinder moved upwards in order to grab and lift the apple of the rollers (1). Thereafter, the cylinder turned 90° around its axis in order to turn the apple with its axis perpendicular to the supporting plate. After repositioning of the apple on the rollers the motors (26) were reactivated and the vision system (15) further analysed the orientation (position of the stem) and surface characteristics of the apple.
The vision system (15) comprised a computing unit running Halcon image analysis routines, a camera (7) mounted on a frame 40 cm above the rollers and a laser light system (3) projecting a line of laser light (33) on the apple (14) on the rollers (1) (Figure 10). This set-up allowed to respectively determine:
● the orientation of the stem crown axis relative to the supporting plate
● the position of the stalk
● the colour variation on the apple surface
● the optically detectable quality parameters of the apple

*The determination of the orientation of the stem crown axis relative to the supporting plate:* When the apple was rotating around an axis perpendicular to its crown-stalk axis with the crown-stalk axis parallel to the supporting plate, the crown and stalk alternately appeared in the images captured by the camera mounted above the rotating apple. The depressions in the apple at the level of the crown and stalk, respectively, caused a substantial deformation of the line of laser light (33) projected on the apple each time the crown or stem appeared in the captured image. Upon occurrence of such substantial deformations of the projected line of laser light it was concluded that the apple was rotating with its crown-stalk axis parallel to the supporting plate. Given that the crown and stalk areas did not appear in the images captured by the camera when the apple was rotating with its crown-stalk axis perpendicular to the supporting plate, only limited deformation of the projected line of laser light occurred in this situation.

*Determination of the position of the stalk*: Apples have in common that the apple half at the side of the stalk has a larger diameter than the apple half at the crown side. Once the vision system determined that the apple was rotating with its stalk-crown axis perpendicular to the supporting plate, the images were analysed in order to determine how the diameter of the apple varied along the crown-stem axis. In this way the apple half with the largest diameter was identified. If this half was situated at the side of the supporting plate it was concluded that the stalk was oriented towards the supporting plate, alternatively it was concluded that the stalk was pointing at the opposite side of the supporting plate.

*Determination of the colour variation on the apple surface using the vision system*: During the rotation of the apple perpendicular to the supporting plate the captured images were analysed in order to determine the side of the apple comprising the most pronounced red blush. This information allowed to stop the rollers such that the red blush was facing upwards at the end of the position and orientation determination process.

*Determination of the apple quality parameters using the vision system*: During the rotation of the apple perpendicular to the supporting plate the captured images were analysed in order to determine following quality related parameters:
● the intensity of the red blush
● the total red area on the apple surface
● the background colours of the apple (yellow/green)
● the grey colouring at the side of the stem
● the diameter of the apple
● the height of the apple

Given that the analysis of the apple quality parameters was carried out while the apple was rotating with its stem-crown axis perpendicular to the supporting plate (2), the position of the camera (7) did not allow to directly analyse the grey colouring at the stem side. Therefore, mirrors were positioned under an angle at each side of the rollers allowing the projection of the image of the stalk area to the camera.

Upon completion of an operation cycle of the system as described above the system had acquired information on both the position and orientation of the apple on the rollers, next to information on different apple quality parameters. Moreover, the system had positioned the apple with its red blush facing upwards. The availability of a system providing such information allowed to design an apparatus for the automatic sorting and packaging of apples.

### Example 2: Apparatus for the automatic sorting and packaging of apples comprising an orientation unit according to the present invention

An apple sorting and packaging apparatus was designed comprising four apple positioning and orientation units as described in example 1 (Figures 1 and 2). The apparatus comprised an upstream apple sorting unit, which supplied apples sorted by diameter towards a supply reservoir in the form of an inclined stainless steel container. The apples gravitationally moved towards a distribution conveyor belt (21), which distributed the apples over four conveyor belts (20) supplying the respective apple positioning and orienting units (22). For each apple on the orientation units the system acquired information on both the position and orientation of the apple on the rollers, next to information on different apple quality parameters. Moreover, upon halt of the rollers following an operation cycle of the orientation unit the apple was positioned with its red blush facing upwards. The information on the quality parameters of the apples was subsequently used to decide whether and within which quality category the apple had to be packaged. Apples that did not meet the minimum criteria were removed via a removal conveyor belt (23) situated between the apple orientation units and the apple packaging unit (19). The apple packaging unit comprised a frame carrying a robot arm, which picked the apples from the rollers of the orienting units and placed them either on the removal conveyor belt (23) or in a blister type packaging positioned on a table (24) downstream of the orienting units (22). The apple packaging unit further comprised a vision system for detecting the position of the blister packaging on the table (24) and to identify the positions in the blister packaging for receiving an apple as well as to identify such positions, which were occupied by an apple and those that were still free. This vision system of the packaging unit allowed an efficient placing of the apples in the blister packaging regardless of the positioning of the blister on the table. The packaging unit placed the apples in the blisters with the red blush facing upwards and the stalks of all apples in the blister packaging pointing in the same direction.

## Claims

1. A system for the automatic determination of the position and orientation of a fruit (14), said system comprising
- two rollers (1) for imposing a rotation to a fruit (14) by rotating at least one of said rollers (1);
- a supporting plate (2) for preventing the fruit (14), placed on the rollers, from falling of the rollers (1) and;
- wherein said rollers and supporting plate (2) are positioned such that a fruit (14) placed between the rollers (1) is supported by the walls of the rollers (1) and exerts a gravitational force on the supporting plate (2),
- a vision system (15) for identifying the position and/or orientation of the fruit (14) on the rollers (1), **characterized in that**
- the angle between the axes of the rollers (1) is between 25 and 40° and the supporting plate (2) is mounted such that it prevents the fruit (14) from falling of the rollers (1) at the side of the diverging ends of the rollers.

2. The system according to claim 1 wherein the rollers (1) are positioned such that the angle between the plane through the axis of the rollers (1) and the base plane is between 25 and 45°.

3. A system for the automatic determination of the position and orientation of a fruit (14), said system comprising
- two rollers (1) for imposing a rotation to a fruit (14) by rotating at least one of said rollers (1);
- a supporting plate (2) for preventing the fruit (14), placed on the rollers, from falling of the rollers (1) and;
- wherein said rollers and supporting plate (2) are positioned such that a fruit (14) placed between the rollers (1) is supported by the walls of the rollers (1) and exerts a gravitational force on the supporting plate (2),
- a vision system (15) for identifying the position and/or orientation of the fruit (14) on the rollers (1), **characterized in that**
- the rollers (1) are conical and wherein the supporting plate (2) is mounted such that it prevents the fruit (14) from falling of the rollers at the side of the rollers with the smallest diameter.

4. The system according to claim 1 to 3, wherein the angle between axes of the rollers (1) is adjustable.

5. The system according to claim 1 to 4, wherein the angle between the plane through the axes of the rollers (1) and the base plane is adjustable.

6. The system according to claims 1 to 5 wherein the roller (1) surface comprises a brush structure for preventing the bruising of the fruit (14).

7. The system according to claims 1 to 6 wherein the rollers (1) have a concave shape.

8. The system according to claims 1 to 7 wherein the supporting plate comprises a recess (8) for preventing the damaging of the fruit (14) stalk.

9. The system according claims 1 to 8 wherein the vision system (15) comprises a computing unit and at least one camera (7) for capturing images of the fruit (14) on the rollers.

10. The system according to claim 9 wherein said system further comprises means for illuminating (3) the fruit (14) on the rollers.

11. The system according to claim 10 wherein said means for illuminating (3) the fruit (14) comprises a LED light.

12. The system according to claim 10 wherein said means for illuminating (3) the fruit (14) comprises a laser light.

13. The system according to any of the claims 1 to 12 wherein the vision system (15) allows for an inspection of the surface characteristics of the fruit (14).

14. The system according to claim 13 wherein said surface inspection comprises the mapping of the colour variation on the fruit (14) surface.

15. The system according to claims 13 or 14 wherein said surface inspection comprises the identification of damaged zones on the fruit (14) surface.

16. The system according to any of the claims 1 to 15 wherein wherein said system further comprises means for repositioning (6) the fruit (14) on the rollers;

17. The system according to claim 16 wherein said means for repositioning the fruit (14) on the rollers comprises a pneumatically driven cylinder (16) for lifting and rotating the fruit (14) and a suction cup (17) for grabbing the fruit (14).

18. The use of a system according to any of the claims of 1 to 17 wherein said fruit (14) is a hard fruit (14).

19. The use of a system according to claim 18 wherein said fruit (14) is selected out of the group consisting of apple, pear, apricot, peach, plum, melon and citrus fruit (14).

20. A fruit packaging apparatus comprising one or more systems according to claims 1 to 17.

21. The fruit packaging apparatus according to claim 20 wherein the information on the identified position and/or orientation of the fruit (14) is used to steer a pick and place unit.

## Patentansprüche

1. System zur automatischen Bestimmung der Position und Ausrichtung einer Frucht (14), wobei das System aufweist
- zwei Rollen (1), um auf eine Frucht (14) durch Rotation von wenigstens einer der Rollen (1) eine Rotation zu übertragen;
- eine Halteplatte (2), um zu verhindern, dass die auf den Rollen angeordnete Frucht (14) von den Rollen herunterfällt,
- wobei die Rollen und die Halteplatte (2) so angeordnet sind, dass eine Frucht (14), die zwischen den Rollen (1) angeordnet ist, von den Wänden der Rollen (1) gehalten wird und eine Schwerkraft auf die Haltplatte (2) ausübt,
- ein Bildverarbeitungssystem (15) zum Bestimmen der Position und/oder Ausrichtung der Frucht (14) auf den Rollen (1),
**dadurch gekennzeichnet dass**
- der Winkel zwischen den Achsen der Rollen (1) zwischen 25° und 40° liegt und die Halteplatte (2) so angebracht ist, dass verhindert wird, dass die Frucht (14) an der Seite der divergierenden Rollenenden von den Rollen (1) hinunterfällt.

2. System gemäß Anspruch 1, wobei die Rollen (1) so angeordnet sind, dass der Winkel zwischen der Ebene durch die Achse der Rollen (1) und der Basisebene zwischen 25° und 45° liegt.

3. System zur automatischen Bestimmung der Position und Ausrichtung einer Frucht (14), wobei das System aufweist
- zwei Rollen (1), um auf eine Frucht (14) durch Rotation von wenigstens einer der Rollen (1) eine Rotation zu übertragen;
- eine Halteplatte (2), um zu verhindern, dass die auf den Rollen angeordnete Frucht (14) von den Rollen herunterfällt
- wobei die Rollen und die Halteplatte (2) so angeordnet sind, dass eine Frucht (14), die zwischen den Rollen (1) angeordnet ist, von den Wänden der Rollen (1) gehalten wird und eine Schwerkraft auf die Haltplatte (2) ausübt,
- ein Bildverarbeitungssystem (15) zum Bestimmen der Position und/oder Ausrichtung der Frucht (14) auf den Rollen (1),
**dadurch gekennzeichnet dass**
- die Rollen (1) konisch sind und die Halteplatte (2) so angebracht ist, dass verhindert wird, dass die Frucht (14) von den Rollen an der Seite der Rollen mit dem kleinsten Durchmesser hinunterfällt.

4. System gemäß Anspruch 1 bis 3, wobei der Winkel zwischen den Achsen der Rollen (1) anpassbar ist.

5. System gemäß Anspruch 1 bis 4, wobei der Winkel zwischen der Ebene durch die Achsen der Rollen (1) und der Basisebene anpassbar ist.

6. System gemäß einem der Ansprüche 1 bis 5, wobei die Oberfläche der Rollen (1) eine Bürstenstruktur aufweist, um das Zerquetschen der Frucht (14) zu verhindern.

7. System gemäß den Ansprüchen 1 bis 6, wobei die Rollen (1) eine konkave Form aufweisen.

8. System gemäß den Ansprüchen 1 bis 7, wobei die Halteplatte eine Aussparung (8) aufweist, um eine Beschädigung des Stiels der Frucht (14) zu verhindern.

9. System gemäß den Ansprüchen 1 bis 8, wobei das Bildverarbeitungssystem (15) eine Recheneinheit und wenigstens eine Kamera (7) zum Erfassen der Bilder der Frucht (14) auf den Rollen aufweist.

10. System gemäß Anspruch 9, wobei das System weiterhin Mittel (3) zum Beleuchten der Frucht (14) auf den Rollen aufweist.

11. System gemäß Anspruch 10, wobei die Mittel (3) zum Beleuchten der Frucht (14) ein LED-Licht aufweisen.

12. System gemäß Anspruch 10, wobei die Mittel (3) zum Beleuchten der Frucht (14) ein Laserlicht aufweisen.

13. System gemäß einem der Ansprüche 1 bis 12, wobei das Bildverarbeitungssystem (15) eine Prüfung der Oberflächeneigenschaften der Frucht (14) ermöglicht.

14. System gemäß Anspruch 13, wobei die Oberflächenprüfung einen Abgleich der Farbvariation der Oberfläche der Frucht (14) aufweist.

15. System gemäß dem Anspruch 13 oder 14, wobei die Oberflächenprüfung die Bestimmung beschädigter Zonen der Oberfläche der Frucht (14) aufweist.

16. System gemäß einem der Ansprüche 1 bis 15, wobei das System weiterhin aufweist Mittel (6) zur Neupositionierung der Frucht (14) auf den Rollen.

17. System gemäß Anspruch 16, wobei die Mittel zur Neupositionierung der Frucht (14) auf den Rollen einen pneumatisch angetriebenen Zylinder (16) zum Hochheben und Rotieren der Frucht (14) und einen Sauger (17) zum Greifen der Frucht (14) aufweisen.

18. Verwendung eines Systems gemäß einem der Ansprüche 1 bis 17, wobei die Frucht (14) eine harte Frucht (14) ist.

19. Verwendung eines Systems gemäß Anspruch 18, wobei die Frucht (14) aus einer Gruppe ausgewählt ist, die besteht aus Apfel, Birne, Aprikose, Pfirsich, Pflaume und Zitrusfrucht (14).

20. Fruchtverpackungsvorrichtung, die ein oder mehrere Systeme gemäß den Ansprüchen 1 bis 17 aufweist.

21. Fruchtverpackungsvorrichtung gemäß Anspruch 20, wobei die Informationen zu der bestimmten Position und/oder Ausrichtung der Frucht (14) dazu verwendet werden, eine Bestückungseinheit zu steuern.

## Revendications

1. Système destiné à la détermination automatique de la position et de l'orientation d'un fruit (14), ledit système comprenant :
- deux rouleaux (1) destinés à imposer une rotation à un fruit (14) en faisant tourner l'un au moins desdits rouleaux (1) ;
- une plaque de support (2) destinée à empêcher le fruit (14), placé sur les rouleaux, de tomber des rouleaux (1) ; et
- dans lequel lesdits rouleaux et ladite plaque de support (2) sont positionnés de telle sorte qu'un fruit (14) placé entre les rouleaux (1) soit supporté par les parois des rouleaux (1) et exerce une force de gravité sur la plaque de support (2) ;
- un système de vision (15) destiné à identifier la position et/ou l'orientation du fruit (14) sur les rouleaux (1), **caractérisé en ce que** :
- l'angle entre les axes des rouleaux (1) est compris entre 25° et 40° et la plaque de support (2) est montée de telle sorte qu'elle empêche le fruit (14) de tomber des rouleaux (1) au niveau du côté des extrémités divergentes des rouleaux.

2. Système selon la revendication 1, dans lequel les rouleaux (1) sont positionnés de telle sorte que l'angle entre le plan qui passe par l'axe des rouleaux (1) et le plan de base soit compris entre 25° et 45°.

3. Système destiné à la détermination automatique de la position et de l'orientation d'un fruit (14), ledit système comprenant :
- deux rouleaux (1) destinés à imposer une rotation à un fruit (14) en faisant tourner l'un au moins desdits rouleaux (1) ;
- une plaque de support (2) destinée à empêcher le fruit (14), placé sur les rouleaux, de tomber des rouleaux (1) ; et
- dans lequel lesdits rouleaux et ladite plaque de support (2) sont positionnés de telle sorte qu'un fruit (14) placé entre les rouleaux (1) soit supporté par les parois des rouleaux (1) et exerce une force de gravité sur la plaque de support (2) ;
- un système de vision (15) destiné à identifier la position et/ou l'orientation du fruit (14) sur les rouleaux (1), **caractérisé en ce que** :
- les rouleaux (1) sont coniques et dans lequel la plaque de support (2) est montée de telle sorte qu'elle empêche le fruit (14) de tomber des rouleaux au niveau du côté des rouleaux présentant le plus petit diamètre.

4. Système selon les revendications 1 à 3, dans lequel l'angle entre les axes des rouleaux (1) est réglable.

5. Système selon les revendications 1 à 4, dans lequel l'angle entre le plan qui passe par les axes des rouleaux (1) et le plan de base est réglable.

6. Système selon les revendications 1 à 5, dans lequel la surface du rouleau (1) comprend une structure de brosse destinée à empêcher de meurtrir le fruit (14).

7. Système selon les revendications 1 à 6, dans lequel les rouleaux (1) présentent une forme concave.

8. Système selon les revendications 1 à 7, dans lequel la plaque de support comprend un renfoncement (8) destiné à empêcher d'endommager la queue du fruit (14).

9. Système selon les revendications 1 à 8, dans lequel le système de vision (15) comprend une unité de calcul et au moins une caméra (7) destinée à acquérir des images du fruit (14) sur les rouleaux.

10. Système selon la revendication 9, dans lequel ledit système comprend en outre un moyen destiné à éclairer (3) le fruit (14) sur les rouleaux.

11. Système selon la revendication 10, dans lequel ledit moyen destiné à éclairer (3) le fruit (14) comprend une lumière LED.

12. Système selon la revendication 10, dans lequel ledit moyen destiné à éclairer (3) le fruit (14) comprend une lumière laser.

13. Système selon l'une quelconque des revendications 1 à 12, dans lequel le système de vision (15) permet une inspection des caractéristiques de la surface du fruit (14).

14. Système selon la revendication 13, dans lequel ladite inspection de la surface comprend la cartographie de la variation de couleur de la surface du fruit (14).

15. Système selon la revendication 13 ou 14, dans lequel ladite inspection de la surface comprend l'identification des zones endommagées à la surface du fruit (14).

16. Système selon l'une quelconque des revendications 1 à 15, dans lequel ledit système comprend en outre un moyen destiné à repositionner (6) le fruit (14) sur les rouleaux.

17. Système selon la revendication 16, dans lequel ledit moyen destiné à repositionner le fruit (14) sur les rouleaux comprend un cylindre entraîné de manière pneumatique (16) pour soulever et faire tourner le fruit (14) et une ventouse (17) pour saisir le fruit (14).

18. Utilisation d'un système selon l'une quelconque des revendications 1 à 17, dans lequel ledit fruit (14) est un fruit dur (14).

19. Utilisation d'un système selon la revendication 18, dans lequel ledit fruit (14) est sélectionné dans le groupe constitué par une pomme, une poire, un abricot, une pêche, une prune, un melon et un agrume (14).

20. Appareil de conditionnement de fruit comprenant un ou plusieurs systèmes selon les revendications 1 à 17.

21. Appareil de conditionnement de fruit selon la revendication 20, dans lequel les informations concernant la position et/ou l'orientation identifiées du fruit (14) sont utilisées pour orienter une unité de préhension et de placement.
